# DEMANDE DE BREVET EUROPEEN

(11) **EP 0 748 974 A1**
(43) Date de publication de la demande: **18.12.1996**
(21) Numéro de dépôt: 96401177.9
(22) Date de dépôt: 03.06.1996
(51) Int. Cl.: F16L 31/02

(54) **Dispositif de raccordement renforcé de conduits ou de tuyaux souples et/ou élastiquement déformables**

(30) Priorité: 13.06.1995 FR 9506977
(71) Demandeur: HUTCHINSON S.A., F-75008 Paris (FR)
(72) Inventeur: Godeau, Denis, 45260 Vieilles Maisons (FR); Gautier, Etienne, 45202 Montargis (FR)
(74) Mandataire: Ramey, Daniel

(57) **Abrégé**

Dispositif de raccordement renforcé entre des conduits ou tuyaux (10, 12, 14) souples et/ou élastiquement déformables, comprenant une enveloppe (16) en caoutchouc ou en élastomère surmoulée sur les conduits ou tuyaux à raccorder et un renforcement (20) en matière rigide ou semi-rigide surmoulé ou clipsé sur l'enveloppe (16).

## Description

L'invention concerne un dispositif de raccordement renforcé de conduits ou de tuyaux souples et/ou élastiquement déformables, du type utilisable notamment pour des circuits de fluide sous pression, en particulier dans le domaine automobile.

Il est déjà connu d'utiliser des raccordements qui sont formés d'une enveloppe ou d'un manchon en caoutchouc surmoulé sur les extrémités des conduits ou tuyaux à raccorder, cette enveloppe ou ce manchon assurant à la fois le raccordement entre les conduits ou les tuyaux, l'étanchéité et l'indémontabilité du raccordement.

On a cependant constaté que de tels raccordements se déformaient en réponse aux variations de pression du fluide circulant dans les conduits ou les tuyaux et présentaient une résistance insuffisante aux phénomènes de fatigue résultant de ces variations de pression sur un certain laps de temps.

Des essais ont par ailleurs montré qu'une augmentation de l'épaisseur de l'enveloppe ou du manchon surmoulé ne permettait pas d'améliorer sensiblement la résistance en fatigue de ces raccordements.

Il a également été proposé de supprimer les déformations du raccordement en réponse aux variations de pression interne du fluide en utilisant un insert tubulaire rigide et sensiblement indéformable sur lequel on monte les extrémités des conduits ou tuyaux en caoutchouc à raccorder et une enveloppe extérieure en matière plastique surmoulée sur l'insert et les extrémités des conduits ou des tuyaux montés sur l'insert. Toutefois, les phénomènes de fatigue résultant des variations de pression interne du fluide sont alors reportés et localisés sur les parties des conduits ou des tuyaux adjacentes à l'insert et provoquent leur cisaillement.

L'invention a pour but d'apporter une solution simple, efficace et économique à ce problème.

Elle propose à cet effet un dispositif de raccordement renforcé de conduits ou de tuyaux souples et/ou élastiquement déformables, comprenant une enveloppe en une matière telle qu'un élastomère ou un caoutchouc surmoulée sur les conduits ou tuyaux pour les raccorder de façon étanche, caractérisé en ce qu'il comprend un renforcement extérieur surmoulé ou monté mécaniquement sur ladite enveloppe et réalisé en une matière moins élastiquement déformable que celle de l'enveloppe.

Le renforcement selon l'invention, qui est surmoulé ou monté par clipsage ou encliquetage élastique sur l'enveloppe elle-même surmoulée sur les conduits ou tuyaux à raccorder, a pour effet de limiter beaucoup les déformations provoquées par des variations de pression interne du fluide et de répartir assez uniformément les contraintes résultant de ces variations de pression interne, de sorte que la résistance en fatigue du raccordement et sa durée de vie sont considérablement augmentées.

Selon une première forme de réalisation de l'invention, le renforcement recouvre une majeure partie de ladite enveloppe et est à surface continue.

Selon une autre forme de réalisation de l'invention, ce renforcement est constitué par une cage formée de barreaux reliés entre eux.

Avantageusement, le renforcement est en une matière plastique rigide ou semi-rigide, telle par exemple qu'un polyamide éventuellement armé de fibres ou un polypropylène.

Enfin, ce renforcement peut-être formé avec des moyens annexes de montage, de positionnement ou de fixation, par exemple de montage d'accessoires, de butée ou de fixation sur un support.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 est une vue schématique en élévation d'un dispositif de raccordement selon l'invention;
la figure 2 est une vue schématique en coupe axiale d'un dispositif du même type que celui de la figure 1;
les figures 3 et 4 représentent schématiquement deux autres formes de réalisation du dispositif selon l'invention.

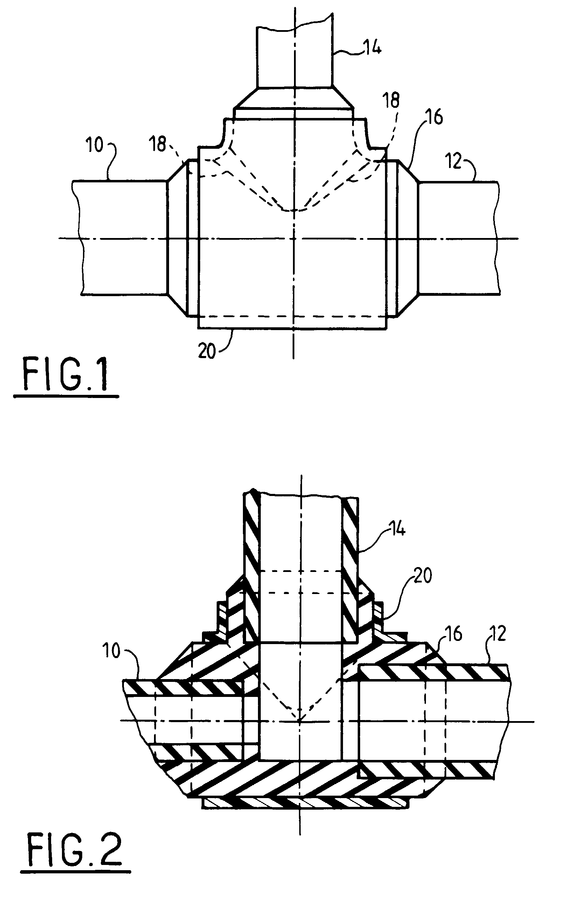

Le dispositif de la figure 1, qui constitue un raccord en T ou une dérivation selon les terminologies utilisées, permet de relier entre elles les extrémités de trois conduits ou tuyaux 10, 12, 14 en une matière souple et élastiquement déformable telle que du caoutchouc, un élastomère ou analogue, servant à la circulation d'un fluide dont la pression est variable.

Le dispositif de raccordement comprend essentiellement une enveloppe 16 surmoulée sur les extrémités à raccorder des conduits 10, 12, 14, cette enveloppe 16 assurant à la fois le raccordement des conduits 10, 12, 14, l'étanchéité de ce raccordement et son indémontabilité et étant de préférence réalisée en une matière identique semblable ou compatible avec celle des conduits à raccorder, pour obtenir une bonne adhérence de l'enveloppe 16 sur ces conduits.

Comme indiqué plus haut, les variations de pression interne du fluide circulant dans les conduits 10, 12, 14 provoquent des déformations de l'enveloppe surmoulée 16 qui peuvent conduire à la longue à sa destruction, notamment dans les zones de raccordement à angle droit désignées par les références 18.

L'invention permet de résoudre ce problème grâce au surmoulage sur l'enveloppe 16 ou sur une majeure partie de celle-ci d'un renforcement 20 en une matière qui est moins élastiquement déformable et, notamment, moins extensible que celle de l'enveloppe 16 et qui, typiquement, est une matière plastique telle qu'un polyamide éventuellement chargé de fibres ou un polypropylène.

Le renforcement 20 constitue ainsi une sur-enveloppe entourant et recouvrant extérieurement la quasi-totalité de l'enveloppe surmoulée 16 et limitant ou supprimant les déformations de celle-ci dues aux variations de pression interne du fluide qui circule dans les conduits 10, 12, 14.

Le renforcement 20 a en outre pour effet de répartir sur la quasi-totalité de l'enveloppe 16 les contraintes dues aux variations de pression interne du fluide, ces contraintes n'étant plus localisées sur les zones précitées 18 de raccordement à angle droit.

La matière du renforcement 20 peut être quelconque, ce renforcement n'ayant que des fonctions mécaniques et aucune fonction d'étanchéité, de sorte que les défauts d'adhérence entre la matière du renforcement 20 et celle de l'enveloppe surmoulée 16 sont sans influence sur le comportement et la durée de vie du dispositif selon l'invention.

Le surmoulage du renforcement 20 sur l'enveloppe 16 peut suivre immédiatement le surmoulage de l'enveloppe 16 sur les extrémités des conduits 10, 12, 14, ou bien peut être réalisé ultérieurement, selon les cas.

On retrouve dans la vue en coupe de la figure 2 des composants semblables à ceux du dispositif de la figure 1, les éléments identiques ou semblables dans ces deux figures étant désignés par les mêmes références.

Le dispositif de la figure 2 est, comme celui de la figure 1, constitué essentiellement par une enveloppe 16 d'élastomère, de caoutchouc ou analogue surmoulée sur les extrémités de conduits 10, 12, 14 à raccorder, et par un renforcement 20 en matière rigide ou semi-rigide, surmoulé sur la majeure partie de l'enveloppe 16 et notamment sur les zones de celle-ci qui entourent les extrémités des conduits 10, 12 et 14.

On voit clairement, sur la vue en coupe de la figure 2, qu'aucun insert tubulaire rigide n'est prévu à l'intérieur de l'enveloppe 16 pour recevoir les extrémités des conduits 10, 12, 14.

Dans certains cas, notamment lorsque les conduits 10 et 12 sont constitués par un même tuyau dont la paroi comporte un orifice de réception de l'extrémité du conduit 14, il est possible que l'enveloppe surmoulée 16 en caoutchouc ne recouvre que la partie semi-cylindrique du tuyau qui reçoit le conduit 14 et ne forme en fait qu'une demi-enveloppe assurant l'étanchéité autour de l'orifice de réception du conduit 14. Ce type de raccordement ou de dérivation peut, comme ceux précédemment décrits être renforcé par un surmoulage 20 identique ou semblable à celui des figures 1 et 2 ou à ceux des figures suivantes 3 et 4 qui vont maintenant être décrites.

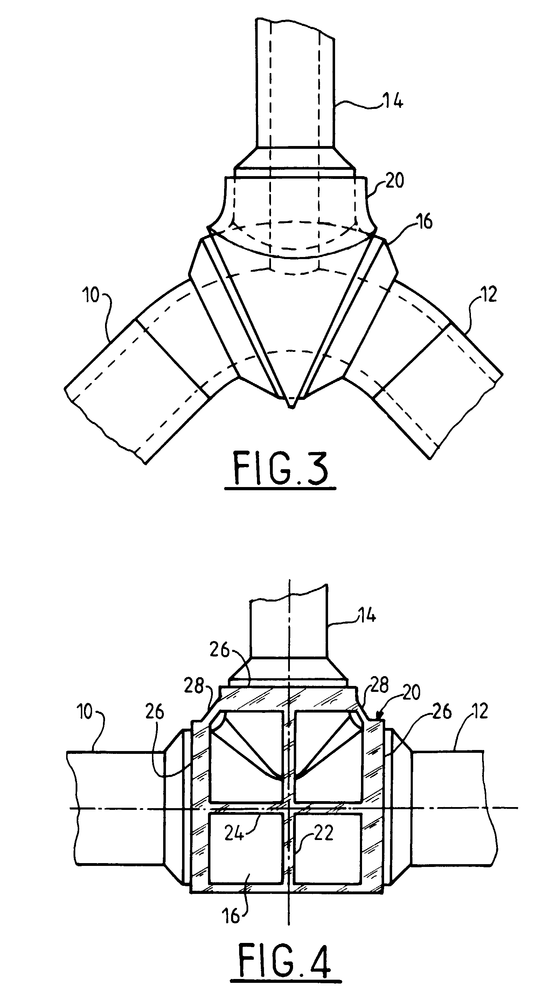

La figure 3 représente schématiquement une variante de réalisation du dispositif selon l'invention, qui diffère des réalisations représentées aux figures 1 et 2 essentiellement en ce que les extrémités des conduits 10, 12, 14 à raccorder sont orientées sensiblement à 120° les unes des autres, l'enveloppe surmoulée 16 ayant en élévation une forme sensiblement triangulaire dans sa zone de raccordement des extrémités des conduits 10 et 12, et une forme sensiblement cylindrique dans sa partie entourant l'extrémité du troisième conduit 14.

Le renforcement 20 qui est surmoulé sur la majeure partie de l'enveloppe 16 a une forme semblable à celle de l'enveloppe 16.

Dans la variante de réalisation de la figure 4, qui concerne un dispositif de raccordement du même type que celui de la figure 1, le renforcement 20 surmoulé sur l'enveloppe 16 elle-même surmoulée sur les extrémités des conduits 10, 12, 14, a la forme d'une cage constitué de barreaux 22, 24 et 28 reliant entre elles des parties annulaires 26 entourant les parties de l'enveloppe 16 formées autour des extrémités des conduits 10, 12, 14.

Cette forme de réalisation permet notamment d'augmenter la résistance du dispositif de raccordement autour des extrémités des conduits 10, 12, 14.

Par ailleurs, l'épaisseur du renforcement surmoulé 20 peut être constante ou variable selon les cas, des surépaisseurs formant par exemple des nervures pouvant également être prévues dans les zones de ce renforcement qui seront soumises aux contraintes les plus élevées.

On peut encore, lors du surmoulage du renforcement 20 sur l'enveloppe 16, former ce renforcement avec des moyens ayant des fonctions différentes comme par exemple des moyens de fixation d'accessoires, des moyens formant butées de positionnement et des moyens de fixation ou d'accrochage sur un support.

En variante, le cage 20 peut être formée indépendamment en une partie ou en deux parties, de façon à pouvoir être disposée autour de l'enveloppe 16 et refermée sur celle-ci par clipsage ou encliquetage élastique, les moyens de clipsage ou d'encliquetage étant formés par exemple sur les parties annulaires 26. Cette variante de réalisation permet de séparer facilement la cage 20 de l'enveloppe 16 en cas de besoin, par exemple en cas de recyclage des composants du raccord (il faut alors séparer les parties en caoutchouc des parties en matière plastique).

Lorsque la cage 20 est surmoulée sur l'enveloppe 16 en caoutchouc, on peut former au moulage des zones ou des points de faiblesse dans certaines parties de la cage 20, ce qui permettra ensuite d'ouvrir assez facilement la cage 20 avec un outil du genre ciseau ou tournevis pour la séparer de l'enveloppe 16.

De façon générale, le dispositif selon l'invention présente également les avantages suivants :
- le renforcement 20 peut être désolidarisé rapidement du raccordement en cas de besoin,
- les extrémités de l'enveloppe 16 et des tuyaux, non recouvertes par le renforcement 20, présentent une grande souplesse,
- les fonctions d'étanchéité et de tenue mécanique peuvent être dissociées, l'étanchéité étant assurée par l'enveloppe 16 et la tenue mécanique par le renforcement 20,
- il est applicable à des raccordements ou des dérivations ayant des formes quelconques.

## Revendications

1. Dispositif de raccordement renforcé de conduits ou de tuyaux souples et/ou élastiquement déformables, comprenant une enveloppe (16) en une matière telle qu'un élastomère ou un caoutchouc surmoulée sur les conduits ou tuyaux (10, 12, 14) pour les raccorder de façon étanche, caractérisé en ce qu'il comprend un renforcement extérieur (20) surmoulé ou monté mécaniquement sur ladite enveloppe (16) et réalisé en une matière moins élastiquement déformable que celle de l'enveloppe.

2. Dispositif selon la revendication 1, caractérisé en ce que ledit renforcement recouvre une majeure partie de ladite enveloppe (16).

3. Dispositif selon la revendication 1 ou 2, caractérisé en ce que ledit renforcement est à surface continue.

4. Dispositif selon la revendication 1 ou 2, caractérisé en ce que ledit renforcement est à surface discontinue.

5. Dispositif selon la revendication 1 ou 4, caractérisé en ce que ledit renforcement est constitué d'une cage formée de barreaux (22, 24, 28) reliés entre eux.

6. Dispositif selon la revendication 5, caractérisé en ce que ladite cage comprend des parties annulaires (26) entourant des parties de l'enveloppe (16) surmoulées sur les conduits ou tuyaux (10, 12, 14) à raccorder, ces parties annulaires (26) étant reliées entre elles par les barreaux (22, 24, 28).

7. Dispositif selon l'une des revendications 1 à 4, caractérisé en ce que ledit renforcement est d'épaisseur variable et comprend éventuellement des nervures.

8. Dispositif selon l'une des revendications précédentes, caractérisé en ce que ledit renforcement est en une matière plastique rigide ou semi-rigide telle par exemple qu'un polyamide ou un polypropylène.

9. Dispositif selon l'une des revendications précédentes, caractérisé en ce que ledit renforcement comprend des moyens annexes de montage, de positionnement ou de fixation, par exemple de montage d'accessoires, de butée ou de fixation sur un support.

10. Dispositif selon l'une des revendications précédentes, caractérisé en ce que le renforcement est réalisé en une ou plusieurs parties montées autour de l'enveloppe (16) par clipsage ou encliquetage élastique.
